# EUROPÄISCHE PATENTSCHRIFT

(11) **EP 1 349 436 B1**
(45) Veröffentlichungstag und Bekanntmachung des Hinweises auf die Patenterteilung: **30.05.2007**
(21) Anmeldenummer: 03007024.7
(22) Anmeldetag: 27.03.2003
(51) Int. Cl.: H05B 37/02, H05B 39/08, H05B 39/04

(54) **Schaltbares Leuchtmittel mit Hilfsbeleuchtung**
Switchable luminaire with auxiliary light
Dispositif d'éclairage commutable avec lumière auxiliaire

(30) Priorität: 29.03.2002 DE 10214198
(43) Veröffentlichungstag der Anmeldung: 01.10.2003
(73) Patentinhaber: Münchner Hybrid Systemtechnik GmbH, 80339 München (DE)
(72) Erfinder: Strunkeit, Claudia, 81373 München (DE); Rudrich, Hans-Peter, 81373 München (DE)
(74) Vertreter: Liesegang, Eva

(56) Entgegenhaltungen:
- EP-A- 1 349 279
- DE-A- 3 540 680
- DE-A- 19 812 555
- US-A- 4 878 107
- US-A- 5 684 294
- US-A1- 2002 020 808

## Beschreibung

Die Erfindung betrifft ein über einen Hauptschalter schaltbares Leuchtmittel mit einer Hilfsbeleuchtung, wobei der Hauptschalter als Betätigungsmittel eine optoelektronische Sensoranordnung, die nach dem Reflexlichttasterprinzip arbeitet, aufweist und die Hilfsbeleuchtung mittels eines Dämmerungsschalters automatisch zu- bzw. abgeschalten werden kann. Spezieller betrifft die Erfindung ein schaltbares Leuchtmittel mit Hilfsbeleuchtung gemäß dem Oberbegriff von Patentanspruch 1. Ein solches Leuchtmittel ist aus der DE 198 12 555 bekannt.

Neben mechanischen Bedienelementen für Schalter kommen wegen ihres recht einfachen Fertigungs- und Montageaufwandes und den immer höheren Anforderungen an die Zuverlässigkeit und den Bedienungskomfort bei recht unterschiedlichen Umgebungsbedingungen immer häufiger Berührungsschalter auf der Basis von kapazitiven bzw. optoelektronischen Sensoren zur Anwendung. Dabei wird bei den Bedienelementen auf optoelektronischer Basis zwischen passiven und aktiven Sensoren unterschieden, wobei bei den passiven Sensoren nur ein Fotoempfänger bzw. ein gegenüber thermischer IR-Strahlung sensitiver Empfänger zum Einsatz kommt, dagegen der aktive Sensor aus einem Strahler mit gerichtetem Strahl und einem seitlich angeordneten, fotosensitiven Empfänger besteht. Solche Reflexlichttaster werden beispielsweise in den Druckschriften DE 42 07 772 A1, DE 195 47 301 C1 beschrieben und weisen im Vergleich zum passiven Sensor eine erhöhte Signalsicherheit bei gleichzeitig verringerten Energiebedarf auf.

Eine weitere Senkung des Energieverbrauches wird dadurch erzielt, indem das Leuchtmittel nur dann aktiviert ist, wenn es unbedingt benötigt wird. Insbesondere bei Dunkelheit ist zur Orientierung aber oft eine Minimalbeleuchtung notwendig, was durch eine Hilfs- bzw. Notbeleuchtung realisiert wird. Diese sollte wiederum trotz Dauerbetriebs einen geringen Energieverbrauch aufweisen. Als Lichtquelle dafür bieten sich Leuchtdioden an, da diese langlebig und weitestgehend wartungsfrei sind, und sehr einfach angesteuert werden können. In der Offenlegungsschrift DE 198 43 330 A1 wird eine solche Notbeleuchtung mit Leuchtdioden als Lichtquelle offenbart.

Das Einschalten der Notbeleuchtung kann zwar per Hand erfolgen, oft bedarf es aber auch einer Automatisierung, was in der Regel mit einem Dämmerungsschalter erfolgt. Dieser misst ständig das Umgebungslicht und schaltet ab einem vorbestimmten Schwellwert die Notbeleuchtung zu. In der Druckschrift DE 41 15 260 A 1 wird eine Tunnelbeleuchtung dargestellt, die als Signalleuchtelemente Leuchtdioden verwendet. Festzustellen ist aber, daß ein schaltbares Leuchtmittel mit Notbeleuchtung, wie bisher ausgeführt, zumindest aufweisen muss das Leuchtmittel, den Schalter für das Leuchtmittel, die Notbeleuchtung und den Dämmerungsschalter für die automatische Zu- und Abschaltung der Notbeleuchtung. Dies stellt aber unstrittig einen recht hohen Material- und Installationsaufwand dar.

DE 198 12 555 beschreibt eine Vorrichtung zur berührungslosen Steuerung einer Lichtquelle. Das Ein- und Ausschalten der Lichtquelle erfolgt durch kurzzeitiges Beeinflussen des Strahlengangs einer Lichtschranke zwischen einem Strahler und einem lichtempfindlichen Element. In der DE 198 12 555 ist eine zusätzliche Lichtquelle vorgesehen, die als Orientierungshilfe dient. Eine ähnliche Vorrichtung, jedoch ohne Orientierungshilfe, ist in DE 199 52 795 beschrieben.
Die US 4,878,107 A beschreibt eine lichtempfindliche LED, in die ein Lichtstrahler und ein Lichtsensor integriert sind. Die lichtempfindliche LED wird als Schalter verwendet, wobei der Strahler auch zum Anzeigen des Schaltzustandes durch unterschiedliche Intensitäten oder Blinken verwendet werden kann. Gleichzeitig wird das Ausgangssignal des Strahlers auch zum Ansteuern des Lichtsensors verwendet. Wie dies im einzelnen realisiert ist, ist in dieser Schrift nicht beschrieben.
Die US 2002/020808 A1 beschreibt einen lichtempfindlichen Berührungsschalter mit einem Sender und einem lichtempfindlichen Element, wobei der Sender so gesteuert werden kann, daß er Licht zum Betreiben des Schalters nur während kurzer Zeitspannen aussendet und während der verbleibenden Zeit zum Anzeigen des Schalterzustandes oder als Hilfsbeleuchtung betrieben wird.
Weiterer Stand der Technik auf diesem Gebiet ist beschrieben in der US 5,684,294 A und in der DE 35 40 680 A1.

Grundsätzlich besteht bei herkömmlichen Beleuchtungen häufig der Wunsch, daß der Benutzer den Hauptschalter für die Beleuchtung auch im Dunkeln finden kann.

Es besteht deshalb die Aufgabe, ein schaltbares Leuchtmittel mit Hilfsbeleuchtung zu schaffen, das bei geringem Energiebedarf und hoher Zuverlässigkeit eine deutliche Senkung des Material- und Installationsaufwandes zuläßt.

Diese Aufgabe wird durch die Merkmale des Anspruches 1 gelöst. Vorteilhafte Weiterbildungen der Erfindung sind mit den Unteransprüchen gegeben.

Demnach sieht die Erfindung ein schaltbares Leuchtmittel mit Hilfsbeleuchtung vor, wobei der Hauptschalter für das Leuchtmittel als Betätigungsmittel eine optoelektronische Sensoranordnung aufweist, die nach dem Reflexlichttasterprinzip arbeitet und aus einem Strahler, der im sichtbaren Bereich arbeitet, und einem fotosensitiven Element besteht. Erfindungsgemäß ist eine Hilfsbeleuchtung des Hauptschalters vorgesehen, die durch den Strahler der Sensoranordnung selbst gebildet wird. Eine elektronische Steuereinheit kann zu diesem Zweck den Strahler wahlweise zum Abgeben eines Meßsignals und wahlweise als die Hilfsbeleuchtung ansteuern.

In einer bevorzugten Ausführungsform ist ein Dämmerungsschalter vorgesehen, um die Hilfsbeleuchtung automatisch ein- und auszuschalten. Dies wird vorteilhaft insbesondere dadurch realisiert, daß die elektronische Steuereinheit die optoelektronische Sensoranordnung wahlweise als Berührungs/Nährungs-Detektor (Reflexionssignal-Detektor) und wahlweise als Dämmerungs- oder Umgebungslicht-Detektor steuern und zusätzlich den Strahler als Hilfsbeleuchtung betreiben kann.

In einer ersten Ausführung der Erfindung steuert die Steuereinheit den Strahler abhängig von einem Schaltsignal als Hilfsbeleuchtung an. Beispielsweise kann die Hilfsbeleuchtung immer dann eingeschaltet sein, wenn das zu schaltende Leuchtmittel ausgeschaltet ist, oder die Hilfsbeleuchtung kann abhängig von anderen externen Signalen ein- und ausgeschaltet werden. In einer zweiten, bevorzugten Ausführung der Erfindung schaltet die Steuereinheit den Strahler abhängig von dem Signal des Umgebungslicht-Detektors automatisch ein- und aus, wenn bestimmte Helligkeitsschwellwerte unter- bzw. überschritten sind.

Erfindungsgemäß werden sowohl das fotosensitive Element als auch der Strahler von der elektronischen Steuereinheit gemeinsam getaktet werden und der Takt zumindest in regelmäßigen Abständen sowohl einen Meßzyklus als auch einen Arbeitszyklus beinhaltet. Der Takt kann innerhalb jeder Periode einen Meßzyklus und einen Arbeitszyklus aufweisen, oder Meßzyklen können in regelmäßigen Intervallen innerhalb des Taktes verteilt sein. Im Meßzyklus wird dann das fotosensitive Element einmal als Umgebungslicht-Detektor verwendet, währenddessen der Strahler grundsätzlich deaktiviert ist, und ein weiteres mal als Reflexionssignal-Detektor, währenddessen der Strahler mindestens einen Meßimpuls abgibt. In Abhängigkeit vom Meßergebnis des Umgebungslicht-Detektors arbeitet dann während des nachfolgenden Arbeitszyklus der Strahler, entsprechend angesteuert von der elektronischen Steuereinheit, als Hilfsbeleuchtung.

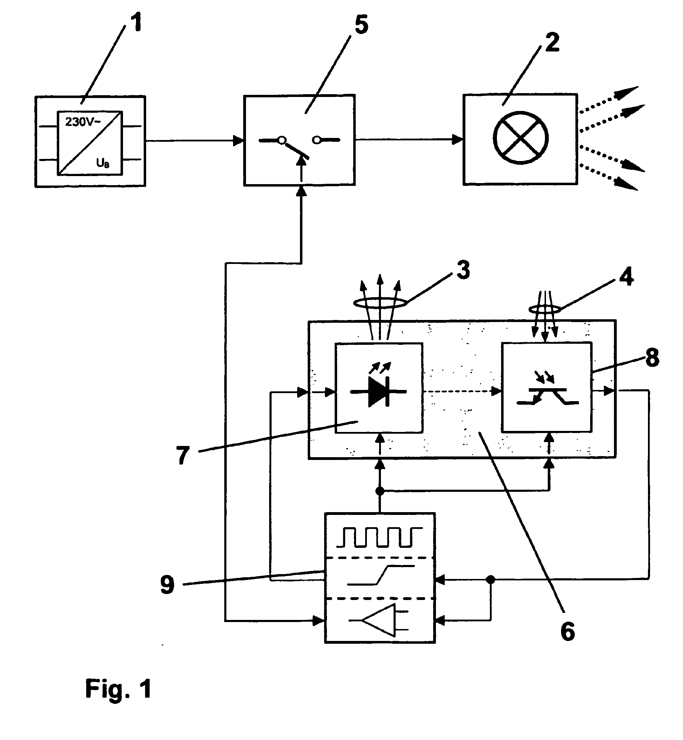

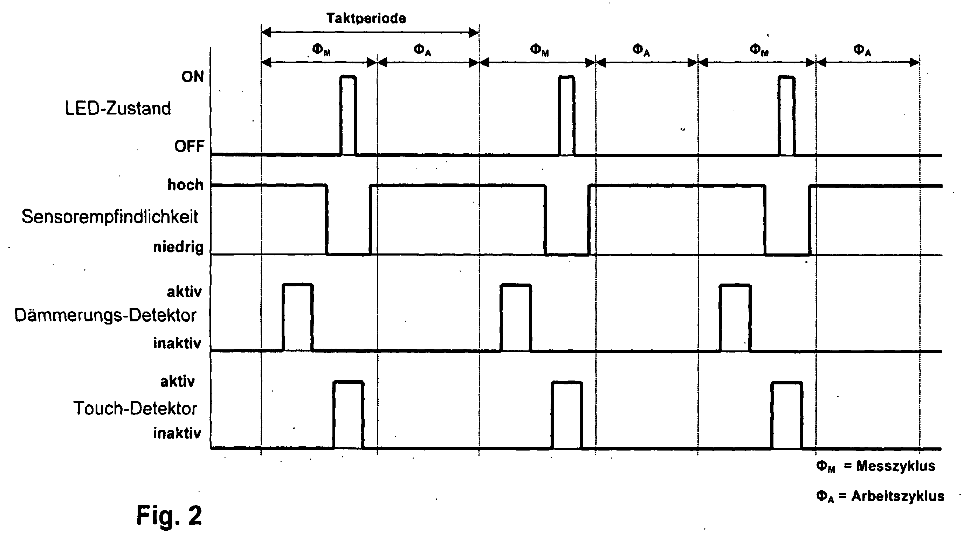

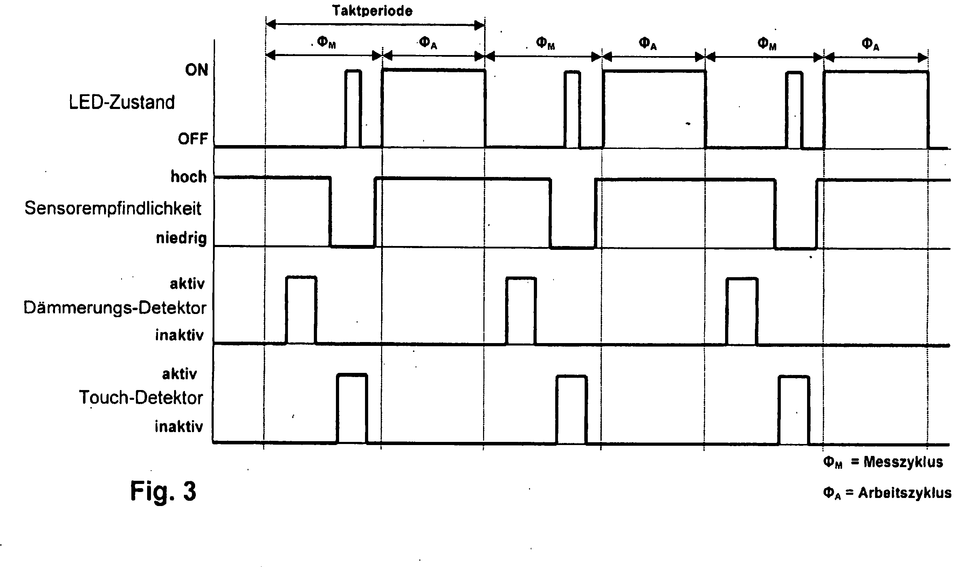

Eine vorteilhafte Variante ist gegeben, wenn durch die elektronische Steuereinheit das fotosensitive Element mit unterschiedlichen Empfindlichkeiten betrieben wird, wobei bei der Verwendung als Umgebungslicht-Detektor eine höhere Empfindlichkeit sinnvoll sein kann. Die Empfindlichkeit des fotosensitiven Elementes kann besonders einfach durch die zeitweise Änderung eines Arbeitswiderstandes verändert werden.
Als kostengünstig erweist sich, wenn es sich bei dem Strahler um wenigstens eine LED und bei dem fotosensitiven Element um wenigstens eine Fotodiode oder einen Fototransistor handelt. Der Strahler der erfindungsgemäßen optoelektronischen Sensoranordnung kann eine Lichtquelle sein, die sichtbares Licht in dem gesamten sichtbaren Lichtspektrum, d.h. im Bereich von 400 - 800 nm Wellenlänge, aussendet. Vorzugsweise sendet der Strahler bei Verwendung als die Hilfsbeleuchtung weißes Licht aus.
Die Erfindung schafft somit ein schaltbares Leuchtmittel mit einer Hilfsbeleuchtung, das mit geringem Aufwand an Material und Herstellungskosten gefertigt werden kann. Bei Verwendung geeigneter Bauteile für den Hauptschalter und optoelektronischer Standard-Komponenten für die optoelektronische Sensorandordnung/Hilfsbeleuchtung, wie LEDs und Photodioden oder Phototransistoren, wird eine hohe Zuverlässigkeit bei geringen Kosten und minimalem Energiebedarf erreicht. Die Hilfsbeleuchtung kann bei Bedarf ständig aktiviert sein, ohne daß dadurch nennenswerte Energieverluste entstehen. Die Hilfsbeleuchtung kann einerseits als Orientierungslicht für die Bedienung des Hauptschalters des Leuchtmittels dienen, zugleich aber auch als Notbeleuchtung für die nähere Umgebung des Schalters im Dunkeln. Zum Ein- und Ausschalten der Leuchte muß der Hauptschalter lediglich mit einem Gegenstand, wie einem Finger, berührt oder angenähert werden, um die Sensoranordnung zu aktivieren und somit den Schalter zu betätigen.
Eine weitere Senkung des Energiebedarfs entsteht durch Verwendung des photosensitiven Elements der Sensoranordnung auch als Umgebungslichtsensor (Dämmerungsschalter) und durch automatisches Ansteuern der Hilfsbeleuchtung abhängig von der erfaßten Umgebungshelligkeit. Dabei ist auch denkbar, daß abhängig von der Definition unterschiedlicher Schaltschwellen die Hilfsbeleuchtung in unterschiedlichen Dimm-Stufen abhängig von der Umgebungshelligkeit oder helligkeitsproportional angesteuert wird.
Weiterhin kann die Hilfsbeleuchtung durch die elektronische Steuereinheit auch zur Signalisierung bestimmter Betriebs- oder Fehlerzustände (Leuchtmittel defekt) mittels definierter Signale (Blinkfolgen, Intensitäten) verwendet werden.
Die Erfindung ist im Folgenden anhand bevorzugter Ausführungsformen mit Bezug auf die Zeichnungen näher erläutert. Es zeigen:
- Figur 1: ein Blockschaltbild eines schaltbaren Leuchtmittels mit Hilfsbeleuchtung gemäß der Erfindung;
- Figur 2: ein Signal- und Zustandsdiagramm der Sensoranordnung gemäß der Erfindung, bei abgeschalteter Hilfsbeleuchtung;
- Figur 3: ein Signal- und Zustandsdiagramm der Sensoranordnung gemäß der Erfindung, bei eingeschalteter Hilfsbeleuchtung.
Das in Fig. 1 dargestellte schaltbare Leuchtmittel 2 besteht aus einer mit dem Leuchtmittel über einen Hauptschalter 5 verbundenen Stromversorgung 1, wobei der Hauptschalter 5 als Betätigungsmittel eine optoelektronische Sensoranordnung 6 aufweist. Diese optoelektronische Sensoranordnung 6 arbeitet nach dem Reflexlichttasterprinzip und umfaßt einen Strahler 7, der Licht im sichtbaren Bereich, beispielsweise weißes Licht, abgibt, und ein fotosensitives Element 8. Der optoelektronischen Sensoranordnung 6 ist eine elektronische Steuereinheit 9 zugeordnet. Diese steuert die optoelektronische Sensoranordnung 6 so an, daß das fotosensitive Element 8 entweder als Berührungs- oder Näherungs-Detektor (Reflexionssignaldetektor) oder als Umgebungslicht-Detektor (insbesondere Dämmerungs-Detektor) 4 verwendet wird. Ferner kann die elektronische Steuereinheit 9 den Strahler 7 wahlweise zum Abgeben eines oder mehrerer Meßimpulse(s) 3 und zugleich auch als Hilfsbeleuchtung 3 betreiben. Eine einfach zu verstehende Variante zur Realisierung dieser Mehrfachverwendung der optoelektronischen Sensoranordnung 6 besteht darin, daß sowohl der Strahler 7 als auch das fotosensitive Element 8 mit einem gemeinsamen Takt betrieben werden, wobei jeder Takt einen Meßzyklus Φ_{M} und einen Arbeitszyklus Φ_{A} beinhaltet.
Während einer ersten Teilphase des Meßzyklus Φ_{M} wird das fotosensitive Element 8 als Umgebungslicht-Detektor 4 verwendet, währenddessen der Strahler 7 deaktiviert ist. Die optoelektronische Sensoranordnung 6 arbeitet somit in dieser Teilphase des Meßzyklus Φ_{M} als Dämmerungsschalter 4. In der Regel nachfolgend während einer zweiten Teilphase des Meßzyklus Φ_{M} wird dann das fotosensitive Element 8 als Reflexionssignal-Detektor betrieben, währenddessen der Strahler 7 mindestens einen Meßimpuls abgibt, wie Fig. 2 zeigt. Damit wird der Betrieb der optoelektronischen Sensoranordnung 6 als Betätigungselement für den Hauptschalter 5 gewährleistet. In Abhängigkeit vom Meßergebnis des Umgebungslicht-Detektors 4 wird der Arbeitszyklus Φ_{A} gestaltet. Wird abhängig von der Umgebungshelligkeit ein vorgegebener Schwellwert überschritten, so wird der Zustand "Tageslicht" erkannt und die elektronische Steuereinheit 9 deaktiviert den Strahlerwährend des Arbeitszyklus, was dem Signalverlauf gemäß Fig. 2 zu entnehmen ist. Wird dagegen durch den Umgebungslicht-Detektor 4 erkannt, daß der vorgegebene Schwellwert unterschritten ist, so ist dies ein Zeichen für beginnende "Dunkelheit" bzw. bereits vollzogene "Dunkelheit". Um infolge die Hilfsbeleuchtung 3 einzuschalten, steuert die elektronische Steuereinheit 9 den Strahler 7 während des Arbeitszyklusses Φ_{A} so an, daß der Strahler 7 für diesen Taktbereich sichtbares Licht abgibt und somit als Hilfsbeleuchtung 3 fungiert. Der Signalverlauf bei "Dunkelheit" ist mit der Fig. 3 gezeigt.
Die "Intensität" oder Helligkeit der Hilfsbeleuchtung kann dabei auf einfache Weise durch eine Änderung der Zeitdauer der Ansteuerung des Strahlers 7 während der Arbeitszyklen gesteuert werden (Pulsweitenmodulation, Pulsdauermodulation).
In einer alternativen, einfacheren Ausführungsform der Erfindung ist die Sensoranordnugn ohne die Umgebungslicht-Detektorfunktion realisiert. Auch in diesem Fall definiert die Steuereinheit einen Meßzyklus und einen Arbeitszyklus. Während des Meßzyklus gibt der Strahler 7 wenigstens einen Meßlichtstrahl aus, und das reflektierte Licht wird von dem fotosensitiven Element 8 in seiner Funktion als Reflexionssignal-Detektor erfaßt. Das fotosensitive Element 8 erkennt, anhand des Pegels des reflektierten Lichtes, ob ein Schaltvorgang zum Umschalten des Leuchtmittels ausgelöst werden soll. Während des Arbeitszyklus kann die Steuereinheit den Strahler 7 entweder immer ansteuern, so daß er ständig als Hilfsbeleuchtung aktiviert ist, oder abhängig von externen Bedingungen ansteuern. Beispielsweise kann definiert werden, daß die Hilfsbeleuchtung immer dann eingeschaltet werden soll, wenn das Leuchtmittel 2 ausgeschaltet ist. Es ist auch denkbar, die Hilfsbeleuchtung während des Arbeitszyklus immer für eine vorgegebene Zeit nach dem Umschalten des Leuchtmittels 2 einzuschalten.
Wesentlich bei der Erfindung ist, daß ein und derselbe Strahler 7 in einem Zeitmultiplexverfahren, durch Definieren eines Meßzyklus und eines Arbeitszyklus, einmal als Hilfsbeleuchtung und einmal als Sender der Sensoranordnung verwendet wird. Zusätzlich sieht die Erfindung vor, daß die Sensoranordnung während des Meßzyklus sowohl als Umgebungslicht-Detektor als auch als Reflexionssignal-Detektor arbeiten kann.
Klar ist, daß die Zeitdauer der Taktfolgen Meßzyklus und Arbeitszyklus nahezu beliebig variiert werden können oder die Abfolge von Meßzyklus und Arbeitszyklus nicht unbedingt zwingend alternierend aufeinanderfolgend sein muß.
Als besonders günstig erweist es sich, wenn die elektronische Steuereinheit 6 das fotosensitive Element 8 mit unterschiedlicher Empfindlichkeit betreibt, wobei bei der Verwendung des fotosensitiven Elementes 8 als Umgebungslicht-Detektor 4 sinnvollerweise eine höhere Empfindlichkeit eingestellt werden kann als bei Verwendung als Reflexionssignal-Detektor. Handelt es sich bei dem fotosensitiven Element 8 um eine Fotodiode oder um einen Fototransistor, dann läßt sich die Empfindlichkeitsänderung des fotosensitiven Elementes 8 auf einfache Weise durch die zeitweise Änderung des Arbeitswiderstandes erzeugen.
Als Strahler 7 bieten sich Leuchtmittel mit kurzen Ansprech- und Abfallzeiten an, wie sie insbesondere bei Licht emittierenden Halbleitern (LEDs, Laserdioden) gegeben sind.

## Patentansprüche

1. Schaltbares Leuchtmittel mit Hilfsbeleuchtung, mit dem Leuchtmittel (2),
einem Hauptschalter (5) für das Leuchtmittel (2), wobei der Hauptschalter (5) als Betätigungsmittel eine optoelektronische Sensoranordnung (6) aufweist, die nach dem Reflexlichttasterprinzip arbeitet, einen Strahler (7), der einen sichtbaren Lichtstrahl erzeugt, und ein fotosensitives Element (8) aufweist,
wobei die Hilfsbeleuchtung durch den Strahler (7) selbst gebildet ist, und mit einer elektronischen Steuereinheit (9) für die optoelektronische Sensoranordnung (6),
**dadurch gekennzeichnet, daß** das fotosensitive Element (8) und der Strahler (7) von der elektronischen Steuereinheit (9) gemeinsam getaktet werden und der Takt einen Meßzyklus und einen Arbeitszyklus beinhaltet, wobei die elektronische Steuereinheit (9) den Strahler (7) während des Meßzyklus zum Abgeben eines Meßsignals und während des Arbeitszyklus als die Hilfsbeleuchtung ansteuert und wobei im Meßzyklus das fotosensitive Element (8) einmal als Umgebungslicht-Detektor ansteuerbar ist, während der Strahler (7) deaktiviert ist, und ein weiteres Mal als Reflexionssignal-Detektor ansteuerbar ist, während Strahler (7) mindestens ein Meßsignal abgibt.

2. Schaltbares Leuchtmittel nach Anspruch 1, mit einem Dämmerungsschalter (4) für die automatische Zu- und Abschaltung oder Intensitätsregelung der Hilfsbeleuchtung (3).

3. Schaltbares Leuchtmittel nach Anspruch 1 oder 2, **dadurch gekennzeichnet, daß** in Abhängigkeit vom Meßergebnis des Umgebungslicht-Detektors der Strahler (7) während des Arbeitszyklus von der elektronischen Steuereinheit (9) als Hilfsbeleuchtung ansteuerbar ist.

4. Schaltbares Leuchtmittel nach einem der vorangehenden Ansprüche, **gekennzeichnet dadurch, daß** das fotosensitive Element (8) durch die elektronische Steuereinheit (9) mit unterschiedlichen Empfindlichkeiten ansteuerbar ist.

5. Schaltbares Leuchtmittel nach Anspruch 4, **gekennzeichnet dadurch, daß** die Empfindlichkeitsänderung des fotosensitiven Elementes (8) durch die zeitweise Änderung des Arbeitswiderstandes erzeugt wird.

6. Schaltbares Leuchtmittel nach einem der vorangehenden Ansprüche, **gekennzeichnet dadurch, daß** der Strahler (7) wenigstens eine LED aufweist und das fotosensitive Element (8) wenigstens eine Fotodiode oder einen Fototransistor aufweist.

## Claims

1. A switchable illuminant with auxiliary lighting with the illuminant (2),
a main switch (5) for the illuminant (2), whereby the main switch (5) comprises as a means of actuation an optoelectronic sensor arrangement (6), which operates according to the reflex light barrier principle, an emitter (7), which generates a visible light beam, and comprises a photo-sensitive element (8),
whereby the auxiliary lighting is formed by the emitter (7) itself, and with an electronic control unit (9) for the optoelectronic sensor arrangement (6),
**characterized in that** the photo-sensitive element (8) and the emitter (7) are clocked together by the electronic control unit (9) and the clock contains a measuring cycle and an operating cycle, whereby the electronic control unit (9) triggers the emitter (7) during the measuring cycle in order to emit a measuring signal, and during the operating cycle as auxiliary lighting, and whereby during the measuring cycle, the photo-sensitive element (8) can be triggered once as an ambient light detector, while the emitter (7) is deactivated, and further, it can be triggered as a reflection signal detector, while the emitter (7) emits at least one measuring signal.

2. A switchable illuminant according to claim 1 with a twilight switch (4) for the automatic connection and disconnection or intensity regulation of the auxiliary lighting (3).

3. A switchable illuminant according to either of claims 1 or 2, **characterized in that** depending on the measuring result of the ambient light detector, the emitter (7) can be triggered during the operating cycle by the electronic control unit (9) as auxiliary lighting.

4. A switchable illuminant according to any one of the preceding claims, **characterized in that** the photo-sensitive element (8) can be triggered by the electronic control unit (9) with different sensitivities.

5. A switchable illuminant according to claim 4, **characterized in that** the change in sensitivity of the photo-sensitive element (8) is generated by the temporary change in operating resistance.

6. A switchable illuminant according to any one of the preceding claims, **characterized in that** the emitter (7) comprises at least one LED, and the photo-sensitive element (8) comprises at least one photo diode or one photo transistor.

## Revendications

1. Dispositif d'éclairage commutable avec lumière auxiliaire, avec le dispositif d'éclairage (2), un interrupteur principal (5) pour le dispositif d'éclairage (2), lequel interrupteur principal (5) servant de moyen d'actionnement possède un dispositif de capteur optoélectronique (6) fonctionnant selon le principe d'un détecteur de lumière réfléchie, un projecteur (7) produisant un faisceau lumineux visible et un élément photosensible (8), dans lequel la lumière auxiliaire est formée par le projecteur (7) même, et avec une unité de commande électronique (9) pour le dispositif de capteur optoélectronique (6), **caractérisé en ce que** l'élément photosensible (8) et le projecteur (7) sont cadencés ensemble par l'unité de commande électronique (9) et la cadence contient un cycle de mesure et un cycle de travail, l'unité de commande électronique (9) commandant le projecteur (7) pendant le cycle de mesure pour qu'il émette un signal de mesure et pendant le cycle de travail pour qu'il serve de lumière auxiliaire, et l'élément photosensible (8) pouvant être activé une fois dans le cycle de mesure comme détecteur de lumière ambiante pendant que le projecteur (7) est désactivé, et activé une autre fois comme détecteur de signal de réflexion pendant que le projecteur (7) émet au moins un signal de mesure.

2. Dispositif d'éclairage commutable selon la revendication 1, avec un interrupteur crépusculaire (4) pour l'arrêt et la mise en marche automatiques ou le réglage de l'intensité de la lumière auxiliaire (3).

3. Dispositif d'éclairage commutable selon la revendication 1 ou 2, **caractérisé en ce qu'**en fonction du résultat de mesure du détecteur de lumière ambiante, le projecteur (7) peut être activé comme lumière auxiliaire par l'unité de commande électronique (9) pendant le cycle de travail.

4. Dispositif d'éclairage commutable selon l'une des revendications précédentes, **caractérisée en ce que** l'élément photosensible (8) peut être activé par l'unité de commande électronique (9) selon différentes sensibilités.

5. Dispositif d'éclairage commutable selon la revendication 4, **caractérisé en ce que** le changement de sensibilité de l'élément photosensible (8) est réalisé par le changement temporaire de la résistance de charge.

6. Dispositif d'éclairage commutable selon l'une des revendications précédentes, **caractérisé en ce que** le projecteur (7) possède au moins une diode électroluminescente et l'élément photosensible (8) possède au moins une photodiode ou un phototransistor.
